# EUROPEAN PATENT APPLICATION

(11) **EP 4 617 961 A1**
(43) Date of publication of application: **17.09.2025**
(21) Application number: 23933475.8
(22) Date of filing: 20.04.2023
(51) Int. Cl.: G06Q 10/02

(54) **METHOD AND APPARATUS FOR RESERVING BATTERY SWAPPING, AND CLOUD SERVER AND TERMINAL DEVICE**

(71) Applicant: Contemporary Amperex Technology Co., Limited, Ningde, Fujian 352100 (CN)
(72) Inventor: ZHANG, Zhixiang, Ningde, Fujian 352100 (CN); YANG, Haiguang, Ningde, Fujian 352100 (CN); ZHANG, Xiaolin, Ningde, Fujian 352100 (CN); WANG, Jian, Ningde, Fujian 352100 (CN)
(74) Representative: von Tietzen und Hennig, Nikolaus
(86) International application number: PCT/CN2023/089598
(87) International publication number: WO 2024/216599

(57) **Abstract**

Embodiments of the present application provide a method and apparatus for reserving battery swapping, a cloud server, and a terminal device. The method includes: receiving a request for reserving battery swapping; and sending a reservation response message in response to the request for reserving battery swapping; where the reservation response message includes battery swapping cost information. The embodiments of the present application can give a prompt about the corresponding battery swapping cost information to a user so that the user can know battery swapping costs corresponding to the request for reserving battery swapping in advance, thereby improving the battery swapping experience of the user compared with the case that the user knows the battery swapping costs only after battery swapping is completed.

## Description

### TECHNICAL FIELD

The present application relates to the technical field of batteries, and in particular, to a method and apparatus for reserving battery swapping, a cloud server, and a terminal device.

### BACKGROUND

Battery swapping stations can realize rapid battery swapping of electric vehicles, but the capacity of the battery swapping stations is limited. During the peak period of battery swapping, there may be a shortage of fully charged batteries, resulting in low battery swapping efficiency and failure to meet the needs of a user. Although the efficiency of battery swapping can be improved by reserving battery swapping, the user can generally know the battery swapping fee only after battery swapping is completed, resulting in a poor battery swapping experience of the user.

### SUMMARY OF THE INVENTION

The present application proposes a method and apparatus for reserving battery swapping, a cloud server, and a terminal device, which can give a prompt about corresponding battery swapping cost information to a user according to a request for reserving battery swapping, so that the user can know battery swapping costs corresponding to the request for reserving battery swapping in advance, thereby improving the battery swapping experience of the user.

In a first aspect, a method for reserving battery swapping is provided, including: receiving a request for reserving battery swapping; and sending a reservation response message in response to the request for reserving battery swapping; where the reservation response message includes battery swapping cost information.

In an embodiment of the present application, the cloud server may give a prompt about corresponding battery swapping cost information to a user according to the request for reserving battery swapping, so that the user can query corresponding battery swapping costs according to different battery swapping needs. Compared with the case that the user can know the battery swapping costs only after battery swapping is completed, the battery swapping experience can be improved for the user.

In a possible implementation mode, the request for reserving battery swapping includes information on an estimated departure location, estimated departure time, and a required battery.

In an embodiment of the present application, by carrying the information on the estimated departure location, the estimated departure time, and the required battery in the request for reserving battery swapping, the cloud server can accurately search for battery swapping stations that meet the needs of the user and send corresponding battery swapping cost information to the user, thereby improving the battery swapping experience of the user.

In a possible implementation mode, the information on the required battery includes a power level of the required battery.

In an embodiment of the present application, since the battery swapping costs are closely related to the power level of the required battery, by including the power level of the required battery in the information on the required battery, the cloud server can more reasonably estimate and send the battery swapping cost information corresponding to the request for reserving battery swapping, thereby improving the battery swapping experience of the user.

In a possible implementation mode, the information on the required battery further includes at least one of the number of the required batteries, a state of health (SOH) of the required battery, a chemical system of the required battery, a size of the required battery, a type of the required battery, and a traveling mileage achievable by the required battery.

In this embodiment, the information on the required battery may include at least one of the above multiple information. The user can set a personalized plan according to different needs for the battery. The cloud server can reasonably estimate the battery swapping cost information corresponding to the personalized plan, thereby improving the battery swapping experience of the user.

In a possible implementation mode, the request for reserving battery swapping further includes a battery swapping label, and the battery swapping label is one of optimal cost, optimal duration, and shortest distance.

In this embodiment, by carrying the battery swapping label in the request for reserving battery swapping, the user may select the corresponding battery swapping label according to his or her actual needs. The cloud server can send the corresponding battery swapping cost information to the user according to the need indicated by the battery swapping label, thereby improving the battery swapping experience of the user.

In a possible implementation mode, before the sending a reservation response message, the method further includes: determining the battery swapping cost information according to the request for reserving battery swapping.

In a possible implementation mode, the determining the battery swapping cost information includes: determining at least one battery swapping station that meets needs of the information on the estimated departure time and the required battery within a preset distance range of the estimated departure location; determining a target battery swapping station that is closest to the estimated departure location in the at least one battery swapping station; determining estimated time of arrival at the target battery swapping station; and determining a battery swapping fee according to an electricity price at the estimated time of arrival and the information on the required battery; where the battery swapping cost information includes information on the target battery swapping station and the battery swapping fee.

In this embodiment, the battery swapping costs corresponding to the battery swapping station are estimated based on the electricity price at the estimated time of arrival at the target battery swapping station. Compared with the case that the battery swapping costs are estimated according to an electricity price generated when the request for reserving battery swapping is sent (place an order), the battery swapping costs estimated in this way are closer to an actual battery swapping price, thereby being capable of reducing a difference between the estimated battery swapping costs and the actual battery swapping price and improving the battery swapping experience of the user.

In a possible implementation mode, the determining estimated time of arrival at the target battery swapping station includes: obtaining road condition information on a road between the estimated departure location and the target battery swapping station at the estimated departure time; and determining the estimated time of arrival according to the estimated departure time, a distance between the estimated departure location and the target battery swapping station, and the road condition information.

In this embodiment, the estimated time of arrival determined by means of the estimated departure time, the distance between the estimated departure location and the target battery swapping station, and the road condition information is closer to actual time of arrival. Then, the battery swapping costs estimated based on the electricity price at the estimated time of arrival are more reasonable and closer to the actual battery swapping price, thereby being capable of improving the battery swapping experience of the user.

In a possible implementation mode, the sending a reservation response message includes: sending the battery swapping cost information when the battery swapping label indicates the shortest distance. In other words, when the user sets the battery swapping label to indicate the shortest distance, the above corresponding battery swapping cost information is sent to the user. In this way, the battery swapping cost information may be provided according to the actual need of the user for the battery swapping label, thereby improving the battery swapping experience of the user.

In a possible implementation mode, the determining the battery swapping cost information includes: determining at least one battery swapping station that meets needs of the information on the estimated departure time and the required battery within a preset distance range of the estimated departure location; determining a target battery swapping station corresponding to shortest duration required to arrive at the at least one battery swapping station; determining estimated time of arrival at the target battery swapping station; and determining a battery swapping fee according to an electricity price at the estimated time and the information on the required battery, where the battery swapping cost information includes information on the target battery swapping station and the battery swapping fee.

In this embodiment, the battery swapping costs corresponding to the battery swapping station are estimated based on the electricity price at the estimated time of arrival at the battery swapping station. Compared with the case that the battery swapping costs are estimated according to an electricity price generated when the request for reserving battery swapping is sent (place an order), the battery swapping costs estimated in this way are closer to an actual battery swapping price, so as to reduce a difference between the estimated battery swapping costs and the actual battery swapping price, thereby improving the battery swapping experience of the user.

In a possible implementation mode, the determining estimated time of arrival at the target battery swapping station includes: obtaining road condition information on a road between the estimated departure location and the target battery swapping station at the estimated departure time; and determining the estimated time of arrival according to the estimated departure time, a distance between the estimated departure location and the target battery swapping station, and the road condition information.

In a possible implementation mode, the sending a reservation response message includes: sending the battery swapping cost information when the battery swapping label indicates the optimal duration. In other words, when the user sets the battery swapping label to indicate the optimal duration, the above corresponding battery swapping cost information is sent to the user. In this way, the battery swapping cost information may be provided according to the actual need of the user for the battery swapping label, thereby improving the battery swapping experience of the user.

In a possible implementation mode, the determining the battery swapping cost information includes: determining at least one battery swapping station that meets needs of the information on the estimated departure time and the required battery within a preset distance range of the estimated departure location; determining at least one battery swapping fee corresponding to the at least one battery swapping station; determining a lowest battery swapping fee in the at least one battery swapping fee, and a target battery swapping station corresponding to the lowest battery swapping fee; where the battery swapping cost information includes information on the target battery swapping station and the lowest battery swapping fee.

In a possible implementation mode, the determining at least one battery swapping fee corresponding to the at least one battery swapping station includes: determining reserved time of arrival at the at least one battery swapping station; and determining the at least one battery swapping fee according to an electricity price at the reserved time of arrival and the information on the required battery.

In this embodiment, the battery swapping costs corresponding to the battery swapping station are estimated based on the electricity price at the estimated time of arrival at the battery swapping station. Compared with the case that the battery swapping costs are estimated according to an electricity price generated when the request for reserving battery swapping is sent (place an order), the battery swapping costs estimated in this way are closer to an actual battery swapping price, so as to reduce a difference between the estimated battery swapping costs and the actual battery swapping price, thereby improving the battery swapping experience of the user.

In a possible implementation mode, the determining the estimated time of arrival at the at least one battery swapping station includes: obtaining road condition information on a road between the estimated departure location and the at least one battery swapping station at the estimated departure time; and determining the estimated time of arrival according to the estimated departure time, a distance between the estimated departure location and the at least one battery swapping station, and the road condition information.

In an embodiment of the present application, the estimated time of arrival at each battery swapping station which is estimated according to the road condition information is closer to actual time of arrival than the estimated time of arrival which is estimated only according to the distance between the estimated departure location and each battery swapping station. In this way, battery swapping costs estimated according to an electricity price at the estimated time of arrival are more reasonable and closer to an actual battery swapping price, thereby improving the battery swapping experience of the user.

In a possible implementation mode, the determining battery swapping costs corresponding to at least one battery swapping station according to the request for reserving battery swapping includes: determining, according to the estimated departure time and the estimated departure location, estimated power consumption required to arrive at the at least one battery swapping station; and determining a battery swapping fee of the at least one battery swapping station according to the information on the required battery, the estimated power consumption, and the electricity price at the estimated time of arrival.

In the above implementation mode, the cloud server may estimate, according to a distance between the estimated departure location and each battery swapping station, the estimated power consumption corresponding to traveling to each battery swapping station, so as to take the estimated power consumption into consideration when estimating the battery swapping costs, which can make the estimated battery swapping costs closer to the actual battery swapping price, thereby improving the battery swapping experience of the user.

In a possible implementation mode, the sending a reservation response message includes: sending the battery swapping cost information when the battery swapping label indicates the optimal costs. In other words, when the user sets the battery swapping label to indicate the optimal costs, the above corresponding battery swapping cost information is sent to the user. In this way, the battery swapping cost information may be provided according to the actual need of the user for the battery swapping label, thereby improving the battery swapping experience of the user.

In the above implementation, when the user selects the battery swapping label to indicate the optimal costs, the cloud platform may give a prompt about a battery swapping station corresponding to lowest battery swapping costs to the user according to a choice of the user, so that the user can choose according to the actual situation, thereby improving the battery swapping experience of the user.

In a possible implementation mode, the reservation response message further includes estimated time of arrival corresponding to the target battery swapping station.

In a possible implementation mode, the method further includes: receiving a confirmation instruction, the confirmation instruction being used for confirming a target battery swapping station corresponding to the battery swapping cost information about reservation so as to perform battery swapping.

In this embodiment, in addition to providing the user with the battery swapping cost information corresponding to the request for reserving battery swapping, the cloud server may provide, according to the confirmation instruction of the user, the user with a service of reserving the target battery swapping station to perform battery swapping, thereby improving the battery swapping experience of the user.

In a second aspect, a method for reserving battery swapping is provided, including: sending a request for reserving battery swapping; and receiving a reservation response message, the reservation response message including battery swapping cost information.

In a possible implementation mode, the request for reserving battery swapping includes information on an estimated departure location, estimated departure time, and a required battery.

In a possible implementation mode, the information on the required battery includes a power level of the required battery.

In a possible implementation mode, the information on the required battery further includes at least one of the number of the required batteries, an SOH of the required battery, a chemical system of the required battery, a size of the required battery, a type of the required battery, and a traveling mileage achievable by the required battery.

In a possible implementation mode, the request for reserving battery swapping further includes a battery swapping label, and the battery swapping label is one of optimal cost, optimal duration, and shortest distance.

In a possible implementation mode, the method further includes: sending a confirmation instruction, the confirmation instruction being used for confirming a target battery swapping station corresponding to the battery swapping cost information about reservation so as to perform battery swapping.

In a third aspect, an apparatus for reserving battery swapping is provided, including: a receiving unit, configured to receive a request for reserving battery swapping; and a sending unit, configured to send a reservation response message in response to the request for reserving battery swapping; where the reservation response message includes battery swapping cost information

In a possible implementation mode, the request for reserving battery swapping includes information on an estimated departure location, estimated departure time, and a required battery.

In a possible implementation mode, the information on the required battery includes a power level of the required battery.

In a possible implementation mode, the information on the required battery further includes at least one of the number of the required batteries, an SOH of the required battery, a chemical system of the required battery, a size of the required battery, a type of the required battery, and a traveling mileage achievable by the required battery

In a possible implementation mode, the request for reserving battery swapping further includes a battery swapping label, and the battery swapping label is one of optimal cost, optimal duration, and shortest distance.

In a possible implementation mode, the apparatus further includes a determining unit, the determining unit being configured to determine the battery swapping cost information according to the received request for reserving battery swapping.

In a possible implementation mode, the determining unit is configured to: determine at least one battery swapping station that meets needs of the information on the estimated departure time and the required battery within a preset distance range of the estimated departure location; determine a target battery swapping station that is closest to the estimated departure location in the at least one battery swapping station; determine estimated time of arrival at the target battery swapping station; and determine a battery swapping fee according to an electricity price at the estimated time of arrival and the information on the required battery; where the battery swapping cost information includes information on the target battery swapping station and the battery swapping fee.

In a possible implementation mode, the determining unit is configured to: obtain road condition information on a road between the estimated departure location and the target battery swapping station at the estimated departure time; and determine the estimated time of arrival according to the estimated departure time, a distance between the estimated departure location and the target battery swapping station, and the road condition information.

In a possible implementation mode, the sending unit is configured to send the battery swapping cost information when the battery swapping label indicates the shortest distance.

In a possible implementation mode, the determining unit is configured to: determine at least one battery swapping station that meets needs of the information on the estimated departure time and the required battery within a preset distance range of the estimated departure location; determine a target battery swapping station corresponding to shortest duration required to arrive at the at least one battery swapping station; determine estimated time of arrival at the target battery swapping station; and determine a battery swapping fee according to an electricity price at the estimated time and the information on the required battery; where the battery swapping cost information includes information on the target battery swapping station and the battery swapping fee.

In a possible implementation mode, the determining unit is configured to: obtain road condition information on a road between the estimated departure location and the target battery swapping station at the estimated departure time; and determine the estimated time of arrival according to the estimated departure time, a distance between the estimated departure location and the target battery swapping station, and the road condition information.

In a possible implementation mode, the sending unit is configured to send the battery swapping cost information when the battery swapping label indicates the optimal duration.

In a possible implementation mode, the determining unit is configured to: determine at least one battery swapping station that meets needs of the information on the estimated departure time and the required battery within a preset distance range of the estimated departure location; determine at least one battery swapping fee corresponding to the at least one battery swapping station; and determine a lowest battery swapping fee in the at least one battery swapping fee, and a target battery swapping station corresponding to the lowest battery swapping fee; where the battery swapping cost information includes information on the target battery swapping station and the lowest battery swapping fee.

In a possible implementation mode, the determining unit is configured to: determine reserved time of arrival at the at least one battery swapping station; and determine the at least one battery swapping fee according to an electricity price at the reserved time of arrival and the information on the required battery.

In a possible implementation mode, the determining unit is configured to: obtain road condition information on a road between the estimated departure location and the at least one battery swapping station at the estimated departure time; and determine the estimated time of arrival according to the estimated departure time, a distance between the estimated departure location and the at least one battery swapping station, and the road condition information.

In a possible implementation mode, the determining unit is configured to: determine, according to the estimated departure time and the estimated departure location, estimated power consumption required to arrive at the at least one battery swapping station; and determine a battery swapping fee of the at least one battery swapping station according to the information on the required battery, the estimated power consumption, and the electricity price at the estimated time of arrival.

In a possible implementation mode, the sending unit is configured to send the battery swapping cost information when the battery swapping label indicates the optimal costs.

In a possible implementation mode, the reservation response message further includes estimated time of arrival corresponding to the target battery swapping station.

In a possible implementation mode, the receiving unit is further configured to: receive a confirmation instruction, the confirmation instruction being used for confirming a target battery swapping station corresponding to the battery swapping cost information about reservation so as to perform battery swapping.

In a fourth aspect, an apparatus for reserving battery swapping is provided, including: sending a request for reserving battery swapping; and receiving a reservation response message, the reservation response message including battery swapping cost information.

In a possible implementation mode, the request for reserving battery swapping includes information on an estimated departure location, estimated departure time, and a required battery.

In a possible implementation mode, the information on the required battery includes a power level of the required battery.

In a possible implementation mode, the information on the required battery further includes at least one of the number of the required batteries, an SOH of the required battery, a chemical system of the required battery, a size of the required battery, a type of the required battery, and a traveling mileage achievable by the required battery.

In a possible implementation mode, the request for reserving battery swapping further includes a battery swapping label, and the battery swapping label is one of optimal cost, optimal duration, and shortest distance.

In a possible implementation mode, the method further includes: sending a confirmation instruction, the confirmation instruction being used for confirming a target battery swapping station corresponding to the battery swapping cost information about reservation so as to perform battery swapping.

In a fifth aspect, a cloud server is provided, including a memory and a processor, where the memory is configured to store instructions, and the processor is configured to read the instructions and execute the method in the first aspect and any possible implementation mode of the first aspect according to the instructions.

In a sixth aspect, a terminal device is provided, including a memory and a processor, where the memory is configured to store instructions, and the processor is configured to read the instructions and execute the method in the second aspect and any possible implementation mode of the second aspect according to the instructions.

In a seventh aspect, a computer-readable storage medium is provided, being configured to store a computer program, where the computer program causes a computer to execute the method as described in the first aspect and any possible implementation mode of the first aspect, or the method as described in the second aspect and any possible implementation mode of the second aspect.

In an eighth aspect, a chip is provided, including a processor configured to invoke and run a computer program from a memory, so that a device equipped with the chip executes the method as described in the first aspect and any possible implementation mode of the first aspect, or the method as described in the second aspect and any possible implementation mode of the second aspect.

In a ninth aspect, a computer program is provided, where he computer program causes a computer to execute the method as described in the first aspect and any possible implementation mode of the first aspect, or the method as described in the second aspect and any possible implementation mode of the second aspect.

In a tenth aspect, a computer program product is provided, including computer program instructions, where the computer program instructions cause a computer to execute the method as described in the first aspect and any possible implementation mode of the first aspect, or the method as described in the second aspect and any possible implementation mode of the second aspect.

### DESCRIPTION OF DRAWINGS

In order to illustrate the technical solutions of the embodiments of the present application more clearly, the following briefly introduces the drawings required in the embodiments of the present application. Obviously, the drawings described below show only some embodiments of the present application. Those of ordinary skill in the art can also obtain other drawings according to the drawings without any creative work.
FIG. 1 is a schematic diagram of a battery swapping scenario according to an embodiment of the present application;
FIG. 2 is a first schematic flowchart of a method for reserving battery swapping according to an embodiment of the present application;
FIG. 3 is a second schematic flowchart of a method for reserving battery swapping according to an embodiment of the present application;
FIG. 4 is a third schematic flowchart of a method for reserving battery swapping according to an embodiment of the present application;
FIG. 5 is a fourth schematic flowchart of a method for reserving battery swapping according to an embodiment of the present application;
FIG. 6 is a fifth schematic flowchart of a method for reserving battery swapping according to an embodiment of the present application;
FIG. 7 is a sixth schematic flowchart of a method for reserving battery swapping according to an embodiment of the present application;
FIG. 8 is a seventh schematic flowchart of a method for reserving battery swapping according to an embodiment of the present application;
FIG. 9 is an eighth schematic flowchart of a method for reserving battery swapping according to an embodiment of the present application;
FIG. 10 is a ninth schematic flowchart of a method for reserving battery swapping according to an embodiment of the present application;
FIG. 11 is a tenth schematic flowchart of a method for reserving battery swapping according to an embodiment of the present application;
FIG. 12 is a schematic flowchart of another method for reserving battery swapping according to an embodiment of the present application;
FIG. 13 is a schematic block diagram of an apparatus for reserving battery swapping according to an embodiment of the present application;
FIG. 14 is a schematic structural diagram of another apparatus for reserving battery swapping according to an embodiment of the present application;
FIG. 15 is a schematic block diagram of a cloud server according to an embodiment of the present application; and
FIG. 16 is a schematic block diagram of a terminal device according to an embodiment of the present application.

In the drawings, the drawings are not drawn to an actual scale.

### DETAILED DESCRIPTION

Embodiments of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

Unless otherwise defined, all technical and scientific terms used in the present application have the same meaning as commonly understood by those skilled in the art belonging to the technical field of the present application; the terms in the present application used in the applied Specification are intended only for the purpose of describing specific embodiments and are not intended to limit the present application; the terms "include/comprise" and "have" and any variations thereof in the Specification and the Claims of the present application and in the description of drawings above are intended to cover non-exclusive inclusion.

Reference in the present application to "embodiment" means that a particular feature, structure, or characteristic described in connection with the embodiment may be contained in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

With the development of new energy technology, the application fields of batteries are more and more extensive. For example, they can be used as a source of power to supply power to vehicles, reducing the use of non-renewable resources. If the capacity of a battery in a vehicle is not enough to support continued driving of the vehicle, a charging apparatus such as a charging pile may be used to charge the vehicle, i.e., to charge the battery in the vehicle, to achieve the cycle of charging and discharging the battery. Or it is also possible to provide battery swapping services for the vehicle through a battery swapping station, i.e., the battery may be quickly removed from or mounted on the vehicle. A battery removed from the vehicle can be placed in a battery storage mechanism of the battery swapping station for charging, so that vehicles subsequently entering the battery swapping station can perform battery swapping.

The battery swapping station can realize rapid battery swapping of electric vehicles, but the capacity of the battery swapping station is limited. During the peak period of battery swapping, there may be a shortage of fully charged batteries, resulting in low battery swapping efficiency and failure to meet the needs of a vehicle owner. In order to improve the user experience, battery swapping can be performed in a balanced manner by reserving battery swapping. Although the user can improve the efficiency of battery swapping by reserving battery swapping on a terminal, he/she can know a battery swapping fee only after battery swapping is completed and cannot foresee the battery swapping fee in advance, resulting in a decline in the battery swapping experience of the user.

In view of this, an embodiment of the present application provides a method for reserving battery swapping, which can give a prompt about corresponding battery swapping cost information to a user according to a request for reserving battery swapping of the user, so that the user can foresee battery swapping costs corresponding to the request for reserving battery swapping in advance, thereby improving the battery swapping experience of the user compared with the case that the user knows the battery swapping costs only after battery swapping is completed.

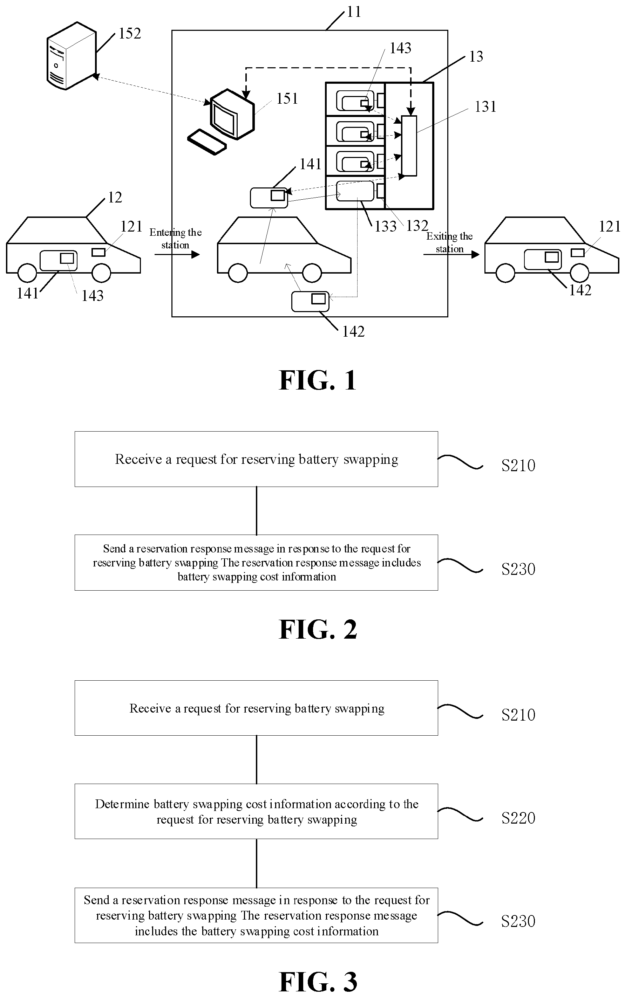

FIG. 1 is a schematic diagram of an application scenario of a method for swapping a battery according to an embodiment of the present application. As shown in FIG. 1, the application scenario of method for swapping the battery may involve a battery swapping station 11, a vehicle 12, and the battery.

The battery swapping station 11 may refer to a place that provides a battery swapping service for vehicles. For example, the battery swapping station 11 may be a fixed place, or the battery swapping station 11 may be a movable place such as a mobile battery swapping vehicle, which is not limited here.

The vehicle 12 may be detachably connected to the battery. In some examples, the vehicle 12 may be a vehicle, such as a car and a truck, that uses a power battery as a source of power.

The battery may include a battery disposed in the vehicle 12 and a battery for battery swapping located in the battery swapping station 11. In order to facilitate distinction, as shown in FIG. 1, a battery to be swapped in the vehicle 12 is denoted as a battery 141, and the battery for battery swapping in the battery swapping station is denoted as a battery 142. The battery may be a lithium-ion battery, a lithium-metal battery, a lead-acid battery, a nickel-cadmium battery, a nickel-metal hydride battery, a lithium-sulfur battery, a lithium-air battery, a sodium-ion battery, or the like, which is not limited here. In terms of scale, the battery may be a battery cell, a battery module, or a battery pack, which is not limited herein. In addition to serving as the power source to supply power to a motor of the vehicle 12, the battery may also supply power to other electrical apparatuses in the vehicle 12. For example, the battery can also supply power to an in-vehicle air conditioner, a vehicle-mounted player, and the like.

After the vehicle 12 provided with the battery 141 is driven into the battery swapping station 11, the battery swapping station 11 removes the battery 141 from the vehicle 12 through a battery swapping apparatus; the battery 142 is taken out of the battery swapping station 11; and the battery 142 is mounted onto the vehicle 12. Afterwards, the vehicle 12 provided with the battery 142 can be driven away from the battery swapping station 11. Through the battery swapping technology, the vehicle can be quickly replenished with energy within a few minutes or even tens of seconds, which improves the user experience.

As shown in FIG. 1, a battery swapping cabinet 13 may be arranged in the battery swapping station 11. The battery swapping cabinet 13 includes a first battery management unit 131 and a charging unit 132. The battery swapping cabinet 13 may also be provided with a plurality of charging compartments 133, and batteries for battery swapping may be placed in the charging compartments 133 of the battery swapping cabinet 13 of the battery swapping station 11. The first battery management unit 131 may be a battery management unit provided in the battery swapping cabinet 13. For example, the first battery management unit 131 may be referred to as a Central Battery Management Unit (CBMU). The charging unit 132 can charge the batteries in the charging compartments 133. In some examples, the charging unit may include an alternating current/direct current module, that is, a component, an apparatus, or a device such as an AC/DC module with a charging function, which is not limited here. The charging unit 132 can be arranged in one-to-one correspondence with the charging compartments 133, or the plurality of charging compartments 133 can share one charging unit 132, which is not limited here.

The battery may be correspondingly provided with a second battery management unit 143. For example, the second battery management unit 143 may be referred to as a Slave Battery Management Unit (SBMU).

The vehicle 12 is also provided with a third battery management unit 121. The third battery management unit 121 can be used to manage a plurality of batteries 141 installed on the vehicle. For example, the third battery management unit 121 may be referred to as a Main Battery Management Unit (MBMU).

In a possible mode, the SBMU may be implemented using a Battery Management System (BMS) of a corresponding battery; and the MBMU may be implemented through a control module of a Battery Disconnect Unit (BDU) or through a BMS of one of the batteries.

The battery swapping station 11 may also be correspondingly provided with a management apparatus. The management apparatus may be of a centralized structure or a distributed structure, which is not limited here. The management apparatus may be arranged inside the battery swapping station 11 or outside the battery swapping station 11. In a case that the management apparatus is of the distributed structure, the management apparatus may also be arranged partially inside the battery swapping station 11 and partially outside the battery swapping station 11. For example, as shown in FIG. 1, the management apparatus may include a station control system 151 inside the battery swapping station 11 and a cloud server 152 outside the battery swapping station 11. This is not limited here. The station control system 151 can also be referred to as a battery management unit in the battery swapping station 11 and is configured to manage and control the battery 142 in the battery swapping station 11.

Optionally, the first battery management unit 131 can communicate and interact with other units, modules, apparatuses, and the like in a wired or wireless manner. The second battery management unit 143 can communicate and interact with other units, modules, apparatuses, and the like in a wired or wireless manner. The third battery management unit 121 can communicate and interact with other units, modules, apparatuses, and the like in a wired or wireless manner. The station control system 151 can communicate and interact with other units, modules, apparatuses, and the like in a wired or wireless manner. The wired communication manner includes, for example, a controller area network (CAN) communication bus. The wireless communication manner includes, but is not limited to, for example, various manners such as Bluetooth communication, WiFi communication, and ZigBee communication.

For example, the first battery management unit 131 may communicate with the second battery management unit 143 to control charging of the batteries 142 in the battery compartments 133. As another example, the third battery management unit 121 can communicate with the second battery management unit 143 to centrally manage the plurality of batteries 141 on the vehicle 12. As another example, the station control system 151 can communicate with the first battery management unit 131, the second battery management unit 143, or the third battery management unit 121 to acquire relevant information about the batteries 141 on the vehicle 12 or the batteries 142 in the charging compartments 133. For another example, the station control system 151 may also communicate with the cloud server 152 to acquire relevant information on the batteries 141 on the vehicle 12 or the batteries 142 in the charging compartments 133.

FIG. 2 shows a schematic flowchart of a method 200 for reserving battery swapping according to an embodiment of the present application. The method 200 for reserving battery swapping may be executed by a cloud server which may be a server for managing battery swapping stations and can analyze and process relevant data for reserving battery swapping. Optionally, the method 200 may be executed by the cloud server 152 shown in FIG. 1. As shown in FIG. 2, the method 200 for battery swapping may include some or all of the following contents.

S210: Receive a request for reserving battery swapping.

S230: Send a reservation response message in response to the request for reserving battery swapping. The reservation response message includes battery swapping cost information.

First of all, it should be noted that the embodiment of the present application is applicable to electrical apparatuses for reserving battery swapping. Optionally, the electrical apparatus may be a vehicle. In the future, the electrical apparatus may also be an apparatus that uses a battery for power or electricity supply, such as a robot, a ship, and an airplane.

In S210, the cloud server may receive the request for reserving battery swapping sent by a terminal device. For example, if a user finds that a power level of a battery of his/her vehicle is extremely low, the user can perform an operation of reserving battery swapping by one click on an APP of his/her mobile phone. The terminal device may send the request for reserving battery swapping clicked by the user to the cloud server. For another example, when the power level is less than a preset threshold, a vehicle-mounted terminal may send the request for reserving battery swapping to the cloud server on its own. After sending the request for reserving battery swapping to the cloud server, the vehicle-mounted terminal should also notify the user. For another example, the cloud server may also obtain relevant information on the electrical apparatus in real time. For example, the cloud server may obtain information on batteries on the electrical apparatus in real time. When the power level of the battery is less than the preset threshold, a mobile phone of the user or the vehicle-mounted terminal may give a prompt about the situation to the user so that the user can send the request for reserving battery swapping to the cloud server by a clicking operation on the mobile phone or the vehicle-mounted terminal. Different requests for reserving battery swapping may carry different information to indicate different battery swapping needs. Exemplarily, the information includes but is not limited to reserved time and location for battery swapping, and needs for a capacity, number, chemical system or the like of the battery.

In S230, after receiving the request for reserving battery swapping, the cloud server may obtain a battery swapping demand of the user, and screen battery swapping stations that meet the conditions of the demand according to the battery swapping demand. For example, if the cloud server obtains that a chemical system of the battery on the electrical apparatus is lithium iron phosphate, the cloud server may first exclude battery swapping stations without lithium iron phosphate batteries. For another example, if the cloud server obtains that a state of health (SOH) of the battery on the electrical apparatus is 80%, the cloud server may first exclude battery swapping stations or mobile battery swapping apparatuses that do not have batteries with the SOH greater than or equal to 80%, and then estimates battery swapping costs corresponding to each battery swapping station that meets the conditions of the demand, and send the reservation response message to the terminal device. The reservation response message may include battery swapping cost information corresponding to the battery swapping demand. The reservation response message may include a plurality of pieces of battery swapping cost information corresponding to a plurality of battery swapping stations that meet the conditions of the demand, or may be a piece of default battery swapping cost information, such as battery swapping cost information corresponding to lowest battery swapping costs.

In this embodiment, in response to the request for reserving battery swapping of the user, the cloud server may send the reservation response message including the battery swapping cost information corresponding to the request for reserving battery swapping to the user, so that the user can foresee the battery swapping costs corresponding to the request for reserving battery swapping in advance. Compared with the case that the user can know the battery swapping costs only after battery swapping is completed, the battery swapping experience is improved for the user.

Optionally, in an embodiment of the present application, the request for reserving battery swapping may include information on an estimated departure location, estimated departure time, and a required battery.

Specifically, the request for reserving battery swapping carries the information on the estimated departure location, and the estimated departure location refers to a location from which the user plans to depart for battery swapping. The user can arbitrarily choose the estimated departure location based on actual conditions. For example, if the user plans to perform battery swapping after completing his/her business at a bank in the afternoon, he/she can choose a bank entrance as the estimated departure location. Of course, the reserved departure location may be the current location of the user or the electrical apparatus. In some embodiments, the current location of the electrical apparatus may be used as a default estimated departure location.

Specifically, the request for reserving battery swapping may also carry information on the estimated departure time, and the estimated departure time refers to the time when the user plans to depart for battery swapping. Optionally, the estimated departure time is certain time, such as 16:00, 16:15, etc. Of course, the estimated departure time may also be a time period, such as 16:00-16:30, 18:20-19:20, etc. When the user clicks on reservation, he/she can select the estimated departure time based on actual conditions. For example, the user selects the time of the current click operation as the estimated departure time, or may select other possible time as the estimated departure time. In some embodiments, the time of the current click operation may be used as the default estimated departure time.

It should be understood that in some embodiments, the estimated departure time may also be replaced with the estimated time of arrival, and the estimated time of arrival may be understood as the time when the user arrives at a battery swapping station and may or is about to perform battery swapping. Whether the time is the estimated time of arrival or the estimated departure time may be selected by the user according to the actual needs. The embodiment of the present application is described by using the time as the estimated departure time.

Specifically, the request for reserving battery swapping may also carry the information on the required battery. As an example, but not a limitation, the information on the required battery may include the number or capacity of the battery, the chemical system of the battery, etc. The information on the required battery may be set or selected by the user, or may be generated by the vehicle-mounted terminal according to the current state of the vehicle.

It should be understood that the information on the estimated departure location, the estimated departure time, and the required battery may not be fully included in the request for reserving battery swapping. That is to say, the request for reserving battery swapping may only include part of the information on the estimated departure location, the estimated departure time, and the required battery, and the other part of the information may be obtained separately by the cloud server. As an example, but not a limitation, the cloud server may obtain a location of the electrical apparatus in real time and set the location of the electrical apparatus as the estimated departure location by default. For another example, the cloud server may obtain the information on batteries on the electrical apparatus in real time, and set the information on the battery as the information on the required battery by default.

In the embodiment, by carrying the information on the estimated departure location, the estimated departure time, and the required battery in the request for reserving battery swapping, the cloud server can accurately search for battery swapping stations that meet the needs of the user and send the corresponding battery swapping cost information to the user, thereby improving the battery swapping experience of the user.

Optionally, in some embodiments, the information on the required battery may include a power level of the required battery. The power level of the required battery refers to a remaining power level of the battery that the user expects to achieve after battery swapping is completed.

The power level of the requested battery may also refer to the electrical energy or electrical work of the required battery. Optionally, the power level of the required battery may be measured in kilowatt-hours. For example, when the power level of the required battery is 30 kwh, the user hopes that after battery swapping is completed, the power level of the battery available for the vehicle is 30 kwh. Optionally, the power level of the required battery may also be replaced with the SOC of the required battery. For example, when the SOC of the required battery is 98%, that is, the user hopes that after battery swapping is completed, the SOC of the battery available for the vehicle is 98%. In this case, the cloud server may search for batteries with the SOC greater than or equal to 98% in various battery swapping stations and determine at least one battery swapping station.

Generally speaking, with other conditions being the same, the battery swapping costs are closely related to the information on the power level of a battery for battery swapping. For example, at the same time, the higher the power level to be achieved through battery swapping, the higher the battery swapping costs. For another example, at the same time, if the chemical system of the required battery is the same, the higher the power level to be achieved through battery swapping, the higher the battery swapping costs.

In the embodiment, since the battery swapping costs are closely related to the power level of the battery for battery swapping, by including the power level of the required battery in the information on the required battery, the cloud server can more reasonably estimate and send the battery swapping cost information corresponding to the request for reserving battery swapping, thereby improving the battery swapping experience of the user.

Optionally, in some embodiments, the information on the required battery may also include at least one of the number of the required battery, the power level of the required battery, the SOH of the required battery, the chemical system of the required battery, the size of the required battery, the type of the required battery, and the traveling mileage achievable by the required battery.

The number of the required batteries refers to the number of batteries required to be installed on the electrical apparatus. For example, the number may be one, two, or even more. Optionally, the number of the required batteries may also be considered as the number of batteries that can be installed on the electrical apparatus. That is, the number of the batteries can be installed on the electrical apparatus is the number of the batteries required to be swapped on the electrical apparatus. Optionally, the number of the required batteries may be considered as the number of the batteries required to be installed on the electrical apparatus. For example, three batteries may be installed on the electrical apparatus, and currently one battery is fully charged and does not need to be swapped, then the number of the required batteries may be two. Optionally, the number of the required batteries may also be replaced with a battery swapping mode. For example, the battery swapping mode may refer to swapping one battery on the electrical apparatus with two batteries, that is, one for two. In the battery swapping mode, two batteries can be installed on the electrical apparatus, but currently only one battery is installed on the electrical apparatus. An installation location of the other battery may be filled with a battery filling block. For another example, the battery swapping mode may also refer to swapping two batteries on the electrical apparatus with one battery, that is, two for one. In the battery swapping mode, one battery and one battery filling block in the battery swapping station may be installed on the electrical apparatus together.

The SOH of the required battery refers to the capacity, health degree, and performance state of the battery. Simply speaking, the SOH of the required battery refers to a ratio of a performance parameter to a nominal parameter after the battery has been used for a period of time, and is a ratio of a capacity released by the battery when being discharged at a certain rate from a fully charged work state to a cut-off voltage to a corresponding nominal capacity. The cloud server may determine at least one battery swapping plan based on the battery swapping stations and mobile battery swapping apparatuses that have batteries with the SOH greater than or equal to that of the required battery.

At present, in terms of the chemical system, the battery may be divided into a ternary system battery, a lithium manganate battery, and a lithium iron phosphate battery according to a positive electrode material. Different electrical apparatuses may be suitable for batteries of different chemical systems. In addition, the batteries of different chemical systems correspond to different battery swapping costs. Therefore, including the chemical system of the required battery in the request for reserving battery swapping helps the cloud server recommend a battery swapping plan that is more suitable for the electrical apparatus and more cost-effective for the user.

The size of the required battery may refer to information on a length, width, and height of the required battery. For example, the cloud server may obtain various information on the length, width, and height of the required battery from the request for reserving battery swapping, so that the cloud server may determine whether there are batteries of the length, width and height in the battery swapping stations and mobile battery swapping apparatuses, and then generate at least one battery swapping plan.

The type of the required battery may refer to, for example, the model of the battery. For example, batteries of different sizes have different models, the model of a large battery is A, and the model of a small battery is B. If the cloud server obtains from the request for reserving battery swapping that the type of the battery is AB, the cloud server may assume that the electrical apparatus needs both a large battery and a small battery. The cloud server may determine whether there is a battery of a type AB in the battery swapping stations.

Usually the traveling mileage achievable by the battery is related to the capacity of the battery. The user may send, based on the subsequent use of the electrical apparatus, the traveling mileage achievable by the required battery to the cloud server by means of the request for reserving battery swapping. After obtaining the mileage, the cloud server may convert the mileage into the capacity of the battery, then determine whether there is a battery swapping station that meets the capacity of the battery in the battery swapping stations, and then give a prompt about the corresponding battery swapping cost information to the user. It should be noted that the request for reserving battery swapping may also directly carry the capacity of the required battery which is converted according to the mileage.

Those skilled in the art can appreciate that the information on the required battery in the embodiment of the present application includes but is not limited to the information in the above embodiments.

It should also be understood that even if the power level of the required battery is the same, the battery swapping costs may be different if any of the number of the required batteries, the SOH of the required battery, the chemical system of the required battery, the size of the required battery, the type of the required battery, and the traveling mileage achievable by the required battery is different. For example, under the same power level, if the manufacturing costs, size, weight, etc. of the ternary system battery and the lithium manganate battery are different, the required battery swapping price is completely different.

In this embodiment, the information on the required battery may include at least one of the above multiple information. The user can set a personalized plan according to different needs for the battery. The cloud server can reasonably estimate the battery swapping cost information corresponding to the personalized plan, thereby improving the battery swapping experience of the user.

Optionally, in an embodiment of the present application, the battery swapping plan may further include a battery swapping label, and the battery swapping label is one of optimal cost, optimal duration, and shortest distance.

The optimal costs mean that the cloud server searches for at least one battery swapping station that meets needs of the information on the conditions according to the information on the conditions in the request for reserving battery swapping, and then selects a battery swapping station corresponding to a lowest battery swapping fee to perform battery swapping.

The optimal duration means that the cloud server searches for at least one battery swapping station that meets needs of the information on the conditions according to the information on the conditions in the request for reserving battery swapping, and then selects a battery swapping station corresponding to shortest duration of arrival to perform battery swapping.

The optimal distance means that the cloud server searches for at least one battery swapping station that meets needs of the information on the conditions according to the information on the conditions in the request for reserving battery swapping, and then selects a battery swapping station corresponding to a shortest distance to perform battery swapping.

Specifically, after the user sets the battery swapping label, the cloud server may send the corresponding battery swapping cost information to the user according to the setting of the user.

In an implementation mode, when the user does not set the battery swapping label, the cloud server may use any one of the optimal costs, the optimal duration, and the shortest distance as a default option, and send the default option to send the battery swapping cost information corresponding to the default option to the user.

In this embodiment, by carrying the battery swapping label in the request for reserving battery swapping, the user may select the corresponding battery swapping label according to his or her actual needs. The cloud server can send the corresponding battery swapping cost information to the user according to the need indicated by the battery swapping label, thereby improving the battery swapping experience of the user.

Optionally, in an embodiment of the present application, as shown in FIG. 3, before step S230, the method 200 may further include: S220, determine the battery swapping cost information according to the request for reserving battery swapping.

In step S220, after receiving the request for reserving battery swapping, the cloud server may determine at least one battery swapping station that meets needs of the information on the estimated departure location, the estimated departure time, and the required battery according to various rules stored in the cloud server, and then estimate battery swapping costs corresponding to the at least one battery swapping station to determine the battery swapping cost information.

Specifically, the cloud server may search for at least one battery swapping station that meets needs of the information on the required battery with a preset distance range of the estimated departure location and a preset time range of the estimated departure time as a search range, then calculate the corresponding battery swapping costs of the at least one battery swapping station, and give a prompt about the corresponding battery swapping cost information to the user.

It should be understood that if the cloud server fails to search for a battery swapping station that conforms to needs of the information on the required battery within the preset distance range of the estimated departure location and the preset time range of the estimated departure time, the cloud server may automatically adjust the search range or suggest the user to modify conditions of the request. Modifying the conditions of the request includes, but is not limited to, modifying information on the preset distance range, the preset time range, the estimated departure time, the estimated departure location, the required battery, etc.

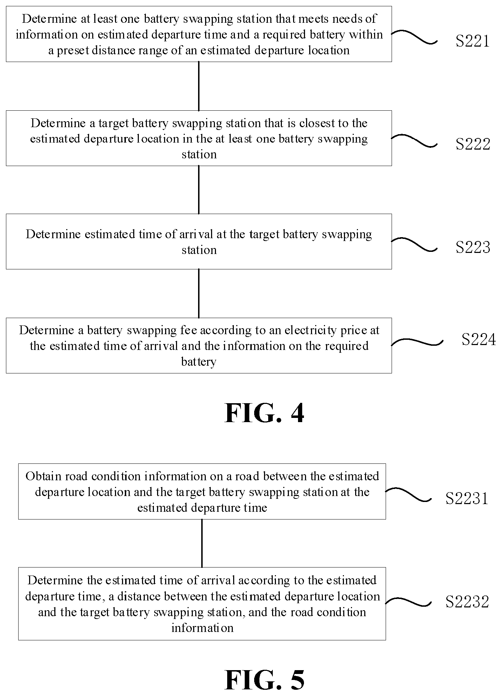

Optionally, in some embodiments, as a first embodiment, as shown in FIG. 4, the above S220: determine the battery swapping cost information may specifically include the following steps S221-S224.

S221: Determine at least one battery swapping station that meets needs of the information on the estimated departure time and the required battery within the preset distance range of the estimated departure location.

Specifically, the cloud server may obtain information on battery swapping stations within the preset time range of the estimated departure time and the preset distance range of the estimated departure location. For example, the cloud server may determine the battery swapping stations within the preset distance range of the estimated departure location according to the estimated departure location required by the user for battery swapping, determine whether the battery swapping stations within the preset distance range of the estimated departure location have battery swapping tasks within the preset time range of the estimated departure time expected by the user according to interaction with the battery swapping stations within the preset distance range of the estimated departure location, and may further determine whether the battery swapping stations within the preset distance range of the estimated departure location and without the battery swapping tasks meet needs of the information on the required battery.

For example, the estimated departure location is the entrance of a shopping mall, the estimated departure time is 9:00 in the morning, the preset time range is 9:00-9:30, and the preset distance range is a range of a distance from the entrance of the shopping mall within 3 kilometers. The cloud server may first obtain the battery swapping stations with a distance from the entrance of the shopping mall within 3 kilometers according to location information of the battery swapping stations, such as a battery swapping station 1, a battery swapping station 2, and a battery swapping station 3. The cloud server further combines battery swapping tasks in the battery swapping stations with the distance from the entrance of the shopping mall within 3 kilometers to determine whether the battery swapping station 1, the battery swapping station 2, and the battery swapping station 3 are idle in the period of 9:00-9:30. Assuming that the battery swapping station 2 and the battery swapping station 3 are idle in the period of 9:00-9:30, the cloud server may further combine information on battery resources in the battery swapping station 2 and the battery swapping station 3 to determine whether needs of the information on the required battery are met. If both the battery swapping station 2 and the battery swapping station 3 meet the needs, it can be determined that both the battery swapping station 2 and the battery swapping station 3 can provide a battery swapping service for the user.

It should be understood that both the preset distance range and the preset time range in the embodiment of the present application may be empirical values, which may be determined in combination with the degree of tolerance of the user. The values of the preset distance range and the preset time range are not specifically limited in the embodiment of the present application.

S222: Determine a target battery swapping station that is closest to the estimated departure location in the at least one battery swapping station.

Specifically, after the at least one battery swapping station that meets needs of the condition information in the request for reserving battery swapping is determined in S221, the nearest battery swapping station is used as the target battery swapping station.

Continuing with the above example, if both the battery swapping station 2 and the battery swapping station 3 meet the needs, and the battery swapping station 2 is closer to the estimated departure location than the battery swapping station 3, the battery swapping station 2 is selected as the target battery swapping station.

S223: Determine estimated time of arrival at the target battery swapping station.

Specifically, the cloud server may estimate the estimated time of arrival for the user to arrive at the target battery swapping station according to the estimated departure time and the distance to the target battery swapping station.

In an implementation mode, the cloud server may estimate the energy consumption per 100 kilometers of the vehicle model according to historical traveling data of the vehicle model of the vehicle, then estimate time required for the vehicle to travel to the target battery swapping station according to the energy consumption per 100 kilometers and a distance between the departure location and the battery swapping station, and next estimate the estimated time of arrival at the target battery swapping station according to the estimated departure time and the required time.

In another implementation mode, the cloud server may estimate the energy consumption per 100 kilometers of a vehicle according to historical traveling data of the user, then estimate time required for the vehicle to travel to the target battery swapping station according to the energy consumption per 100 kilometers and a distance between the departure location and the battery swapping station, and next estimate the estimated time of arrival at the target battery swapping station according to the estimated departure time and the required time.

S224: Determine a battery swapping fee according to an electricity price at the estimated time of arrival and the information on the required battery, where the battery swapping cost information includes information on the target battery swapping station and a battery swapping fee.

The electricity price at the estimated time of arrival is generally positively correlated with the market electricity price. Since the battery swapping station provides a battery swapping service for the user, the electricity price at the estimated time of arrival may also include a certain service fee or may be higher than the market electricity price. The information on the target battery swapping station may include, but is not limited to, one of identification information of the target battery swapping station, location information of the target battery swapping station, and a distance from the estimated departure location to the target battery swapping station.

Due to the tiered electricity consumption policy in China, that is, the market electricity price may fluctuate over time, the price of reservation for battery swapping may also fluctuate over time. For a user who makes a reservation for battery swapping, a price generated when he/she places an order is often battery swapping costs estimated based on the current electricity price generated when he/she places an order. As a result, there may be a difference between the battery swapping costs prompted to the user when he/she places an order and an actual battery swapping price, resulting in a decline in the battery swapping experience of the user.

In an embodiment of the present application, the battery swapping costs are estimated based on the electricity price at the estimated time of arrival at the target battery swapping station. Compared with the case that the battery swapping costs are estimated based on the electricity price at the time when the user places an order, the estimation method of the present application is more reasonable and makes the estimated battery swapping costs closer to the actual battery swapping price, thereby being capable of reducing a difference between the estimated battery swapping costs and the actual battery swapping price and improving the battery swapping experience of the user.

Optionally, in some embodiments, as shown in FIG. 5, the above step S223 may specifically include the following steps S2231 and S2232.

S2231: Obtain road condition information on a road between the estimated departure location and the target battery swapping station at the estimated departure time.

It should be understood that at different times and for the same distance, the road conditions may be different, such as whether the road is unimpeded or congested, and whether the road has an uphill slope, a downhill slope, etc. Due to the different road conditions, even at the same distance, the required time may be different, which may also result in different time of arrival at the target battery swapping station.

Optionally, the cloud server may obtain, through big data, the road condition information on a road segment between the estimated departure location and the target battery swapping station according to the estimated departure time.

S2232: Determine the estimated time of arrival according to the estimated departure time, the distance between the estimated departure location and the target battery swapping station, and the road condition information.

The cloud server may estimate the time required to arrive at the target battery swapping station according to the distance between the estimated departure location and the target battery swapping station and the road condition information, and then determine the estimated time of arrival according to the estimated departure time and the required time.

In this embodiment, the estimated time of arrival determined by means of the estimated departure time, the distance between the estimated departure location and the target battery swapping station, and the road condition information is closer to the actual time of arrival. Then, the battery swapping costs estimated based on the electricity price at the estimated time of arrival are more reasonable and closer to the actual battery swapping price, thereby being capable of improving the battery swapping experience of the user.

Optionally, in some embodiments, that send a reservation response message may include: sending the above battery swapping cost information when the battery swapping label indicates the shortest distance.

In other words, when the user sets the battery swapping label to indicate the shortest distance, the above corresponding battery swapping cost information is sent to the user. In this way, the battery swapping cost information may be provided according to the actual need of the user for the battery swapping label, thereby improving the battery swapping experience of the user.

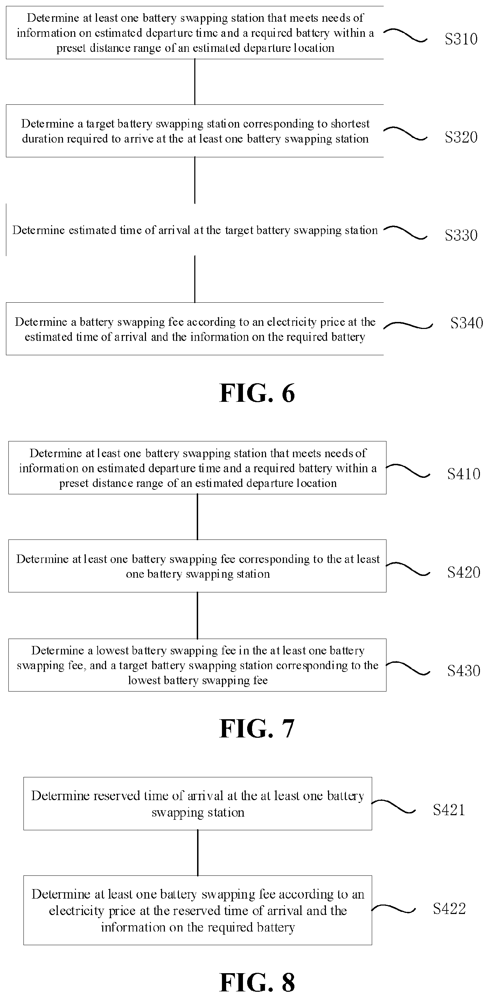

Optionally, in some embodiments, as a second embodiment, as shown in FIG. 6, the above S220: determine the battery swapping cost information may specifically include the following steps S310-S340.

S310: Determine at least one battery swapping station that meets needs of the information on the estimated departure time and the required battery within a preset distance range of the estimated departure location.

The step may refer to the specific implementation mode of the above S221, and for the sake of brevity, it will not be repeated here.

S320: Determine a target battery swapping station corresponding to shortest duration required to arrive at the at least one battery swapping station.

Specifically, after determining the at least one battery swapping station that meets needs of the condition information in the request for reserving battery swapping in S310, the cloud server may estimate the time required to arrive at each battery swapping station in the at least one battery swapping station from the estimated departure location, and select the battery swapping station corresponding to the shortest required time as the target battery swapping station.

More specifically, the cloud server may first obtain the road condition information on a road from the estimated departure location to the above at least one battery swapping station at the estimated departure time, and determine the time required to arrive at each battery swapping station according to the road condition information corresponding to each battery swapping station.

Continuing with the above example, if both the battery swapping station 2 and the battery swapping station 3 meet all the conditions in the request for reserving battery swapping, and time required by traveling from a reserved battery swapping location to the battery swapping station 2 is shorter than time by traveling required from the reserved battery swapping location to the battery swapping station 3, then the battery swapping station 2 is selected as the target battery swapping station.

S330: Determine estimated time of arrival at the target battery swapping station.

The estimated time of arrival may be determined according to the estimated departure time and the shortest required time.

S340: Determine a battery swapping fee according to an electricity price at the estimated time and the information on the required battery. The battery swapping cost information includes information on the target battery swapping station and the battery swapping fee.

The information on the target battery swapping station may include, but is not limited to, one of identification information of the target battery swapping station, location information of the target battery swapping station, and a distance from the estimated departure location to the target battery swapping station.

Due to the tiered electricity consumption policy in China, that is, the market electricity price may fluctuate over time, the price of reservation for battery swapping may also fluctuate over time. For a user who makes a reservation for battery swapping, a price generated when he/she places an order is often battery swapping costs estimated based on the current electricity price generated when he/she places an order. As a result, there may be a difference between the battery swapping costs prompted to the user when he/she places an order and an actual battery swapping price, resulting in a decline in the battery swapping experience of the user.

In this embodiment, the battery swapping costs corresponding to the battery swapping station are estimated based on the electricity price at the estimated time of arrival at the target battery swapping station. Compared with the case that the battery swapping costs are estimated according to an electricity price generated when the request for reserving battery swapping is sent (place an order), the battery swapping costs estimated in this way are closer to an actual battery swapping price, thereby being capable of reducing a difference between the estimated battery swapping costs and the actual battery swapping price and improving the battery swapping experience of the user.

Optionally, in some embodiments, the above step S330: determine estimated time of arrival at the target battery swapping station may specifically include the following steps S331 and S332.

S331: Obtain road condition information on a road between the estimated departure location and the target battery swapping station at the estimated departure time.

S332: Determine the estimated time of arrival according to the estimated departure time, the distance between the estimated departure location and the target battery swapping station, and the road condition information.

The specific implementation modes of the steps S331 and S332 in the embodiment may refer to the above steps S2231 and S2232, and for the sake of brevity, they will not be repeated here.

Optionally, in some embodiments, the step S230: send a reservation response message may include: send the battery swapping cost information when the battery swapping label indicates the optimal duration.

In other words, when the user sets the battery swapping label to indicate the optimal duration, the above corresponding battery swapping cost information is sent to the user. In this way, the battery swapping cost information may be provided according to the actual need of the user for the battery swapping label, thereby improving the battery swapping experience of the user.

Optionally, in some embodiments, as a third embodiment, as shown in FIG. 7, the above S220: determine the battery swapping cost information may specifically include the following steps S410-S430.

S410: Determine at least one battery swapping station that meets needs of the information on the estimated departure time and the required battery within a preset distance range of the estimated departure location.

The step may refer to the specific implementation mode of the above S221, and for the sake of brevity, it will not be repeated here.

S420: Determine at least one battery swapping fee corresponding to the at least one battery swapping station.

It should be understood that for the same request for reserving battery swapping, a fee generated when the user drives a vehicle from the estimated departure location to the at least one battery swapping station to perform battery swapping may vary greatly or slightly due to a distance, time of arrival, etc. Different users have different demands for the battery swapping fee or battery swapping costs. After determining the battery swapping costs corresponding to the at least one battery swapping station, the cloud server may provide lowest battery swapping costs for the user, or provide highest battery swapping costs for the user.

S430: Determine the lowest battery swapping fee in the at least one battery swapping fee, and a target battery swapping station corresponding to the lowest battery swapping fee. The battery swapping cost information includes information on the target battery swapping station and the lowest battery swapping fee.

In an embodiment of the present application, after determining the lowest battery swapping fee, the cloud server determines the battery swapping station corresponding to the lowest battery swapping fee as the target battery swapping station, and sends the information on the target battery swapping station and the lowest battery swapping fee to the user, so that the user can directly view the battery swapping costs corresponding to the lowest costs, thereby improving the battery swapping experience of the user.

Optionally, in some embodiments, as shown in FIG. 8, the above S420 may specifically include:
S421: Determine reserved time of arrival at the at least one battery swapping station.

Specifically, the cloud server may estimate the estimated time of arrival for the user to arrive at the target battery swapping station according to the estimated departure time and the distance to the target battery swapping station.

In an implementation mode, the cloud server may estimate the energy consumption per 100 kilometers of the vehicle model according to historical traveling data of the vehicle model of the vehicle, then estimate time required for the vehicle to travel to the target battery swapping station according to the energy consumption per 100 kilometers and a distance between the departure location and the battery swapping station, and next estimate the estimated time of arrival at the target battery swapping station according to the estimated departure time and the required time.

In another implementation mode, the cloud server may estimate the energy consumption per 100 kilometers of a vehicle according to historical traveling data of the user, then estimate time required for the vehicle to travel to the target battery swapping station according to the energy consumption per 100 kilometers and a distance between the departure location and the battery swapping station, and next estimate the estimated time of arrival at the target battery swapping station according to the estimated departure time and the required time.

S422: Determine the at least one battery swapping fee according to an electricity price at the reserved time of arrival and the information on the required battery.

Due to the tiered electricity consumption policy in China, that is, the electricity price may fluctuate over time, the price of reservation for battery swapping may also fluctuate over time. For a user who makes a reservation for battery swapping, a price generated when he/she places an order is often battery swapping costs estimated based on the current electricity price generated when he/she places an order. As a result, there may be a difference between the battery swapping costs prompted to the user when he/she places an order and an actual battery swapping price, resulting in a decline in the battery swapping experience of the user.

In this embodiment, the battery swapping costs corresponding to the battery swapping station are estimated based on the electricity price at the estimated time of arrival at the battery swapping station. Compared with the case that the battery swapping costs are estimated according to an electricity price generated when the request for reserving battery swapping is sent (place an order), the battery swapping costs estimated in this way are closer to an actual battery swapping price, so as to reduce a difference between the estimated battery swapping costs and the actual battery swapping price, thereby improving the battery swapping experience of the user.

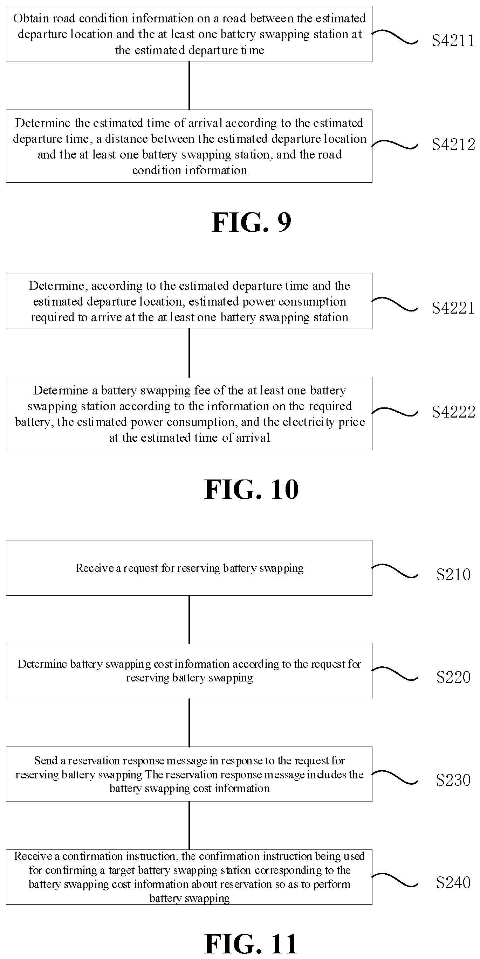

Optionally, in some embodiments, as shown in FIG. 9, the above S421: determine the estimated time of arrival at the at least one battery swapping station may specifically include the following steps S4211 and S4212.

S4211: Obtain road condition information on a road between the estimated departure location and the at least one battery swapping station at the estimated departure time.

It should be understood that the road condition information of roads from the same departure location to different battery swapping stations at the same time is different. Specifically, the cloud server may obtain, through big data, the road condition information of the road from the estimated departure location to each battery swapping station in the at least one battery swapping station at the estimated departure time.

It should also be understood that the above road condition information includes road condition information on the road between the estimated departure location and each battery swapping station in the at least one battery swapping station.

S4212: Determine the estimated time of arrival according to the estimated departure time, the distance between the estimated departure location and the at least one battery swapping station, and the road condition information.

Specifically, the cloud server may estimate the duration required from the estimated departure location to each battery swapping station according to the road condition information and distance corresponding to each battery swapping station in the at least one battery swapping station. The estimated time of arrival at each battery swapping station can be estimated according to the duration required to arrive at each battery swapping station and the estimated departure time.

It should be understood that the above estimated time of arrival includes the estimated time of arrival from the estimated departure location to each battery swapping station in the at least one battery swapping station.

In an embodiment of the present application, the estimated time of arrival at each battery swapping station which is estimated according to the road condition information is closer to actual time of arrival than the estimated time of arrival which is estimated only according to the distance between the estimated departure location and each battery swapping station. In this way, battery swapping costs estimated according to an electricity price at the estimated time of arrival are more reasonable and closer to an actual battery swapping price, thereby improving the battery swapping experience of the user.

Optionally, in some embodiments, as shown in FIG. 10, the above S422: determine the battery swapping costs corresponding to the at least one battery swapping station according to the request for reserving battery swapping may include the following steps S4221 and S4222.

S4221: Determine, according to the estimated departure time and the estimated departure location, estimated power consumption required to arrive at the at least one battery swapping station.

It should be understood that when the user drives a vehicle to the battery swapping station, a certain amount of electricity will be consumed, and this amount of electricity is recorded as the estimated power consumption.

In an implementation mode, the cloud server may estimate the energy consumption per 100 kilometers of the vehicle according to historical traveling data of the vehicle of the user or historical traveling data of the vehicle model of the vehicle, and then estimate estimated power consumption for the vehicle to travel to each battery swapping station according to the energy consumption per 100 kilometers and a distance between the estimated departure location and each battery swapping station, thereby obtaining the estimated power consumption corresponding to each battery swapping station.

In another implementation mode, the cloud server may estimate estimated power consumption for the vehicle to travel to each battery swapping station according to historical traveling data of the vehicle of the user or historical traveling data of the vehicle model of the vehicle, a distance between the estimated departure location and each battery swapping station, and the road condition information, thereby obtaining the estimated power consumption corresponding to each battery swapping station.

S4222: Determine a battery swapping fee of the at least one battery swapping station according to the information of the required battery, the estimated power consumption, and the electricity price at the estimated time of arrival.

The power level of the required battery refers to the power level of the vehicle expected by the user after battery swapping. The power level may be the power level of a fully charged battery or the capacity of a non-fully charged battery.

The battery swapping costs are generally calculated according to a difference value between the remaining power level of the vehicle before battery swapping and the remaining power level of the vehicle after battery swapping. When a user sends the request for reserving battery swapping, the cloud server can only obtain the remaining power level of the vehicle when the user sends the request for reserving battery swapping (place an order), and cannot know the remaining power level of the vehicle battery before battery swapping. Therefore, when calculating the battery swapping costs, the cloud server does not take into account the estimated power consumption required for the vehicle to travel to the battery swapping station, which will cause a difference between the battery swapping costs and the actual battery swapping costs. In this embodiment, the cloud server may take into account the impact of the estimated power consumption when calculating the battery swapping costs, so as to reduce the difference between the estimated battery swapping costs and the actual battery swapping costs.

It should be understood that the remaining power level of the vehicle before battery swapping should be the remaining power level of the vehicle when the user sends the request for reserving battery swapping (places an order) minus the estimated power consumption.

It should be understood that when the battery swapping price is actually calculated, the battery swapping price is generally estimated based on the electricity price at the time of battery swapping and the remaining power level of the vehicle at the time of battery swapping, and not calculated according to the set power level of the required battery when the user places an order, that is, the battery swapping costs = the electricity price at the actual battery swapping time × (the power level of the vehicle after battery swapping - the power level of the vehicle before battery swapping).

For example, the user expects the power level of the vehicle after battery swapping to be 40 kwh or the power level of the vehicle after battery swapping is 40 kwh. The remaining power level of the vehicle when the user places an order is 10 kwh, the power consumption required by the vehicle from the departure location to a battery swapping station, that is, the estimated power consumption, is 3 kwh, and therefore, the power level of the vehicle before battery swapping should be 7 kwh. Therefore, when estimating the battery swapping costs, 40-7=33 kwh should be used as the power level to be achieved through battery swapping to more reasonably calculate the battery swapping fee. That is to say, the impact of the estimated power consumption should be considered when estimating the battery swapping costs.

In the above implementation mode, when estimating the battery swapping costs, the cloud server takes into account the estimated power consumption required by a vehicle from the departure location to the battery swapping station, so as to more reasonably estimate the battery swapping costs and reduce the difference between the estimated battery swapping costs and the actual battery swapping price, thereby improving the battery swapping experience of the user.

Optionally, in some embodiments, the above step S230: send a reservation response message may include: send the battery swapping cost information when the battery swapping label indicates the optimal costs.

In other words, when the user sets the battery swapping label to indicate the optimal costs, the above corresponding battery swapping cost information is sent to the user. In this way, the battery swapping cost information may be provided according to the actual need of the user for the battery swapping label, thereby improving the battery swapping experience of the user.

Optionally, in some embodiments, the reservation response message may further include estimated time of arrival corresponding to the target battery swapping station.

The estimated time of arrival may be accurate time or a time period. Since the road conditions of a journey may change with time or actual conditions, the time of arrival also changes dynamically. When accurate estimated time of arrival cannot be provided, a time period may be provided for the user.

In the above embodiment, by carrying the estimated time of arrival at the target battery swapping station in the reservation response message, it helps the user to arrange other journeys according to the estimated time of arrival, thereby improving the battery swapping experience of the user.

Optionally, in some embodiments, as shown in FIG. 11, the method 200 may further include: S240: receive a confirmation instruction, the confirmation instruction being used for confirming a target battery swapping station corresponding to the battery swapping cost information about reservation so as to perform battery swapping.

Specifically, the cloud server may send the default battery swapping label or the battery swapping cost information and target battery swapping station information corresponding to the battery swapping label set by the user to the user, and at the same time can prompt whether to confirm the reservation. The user may decide, according to the battery swapping cost information corresponding to his/her request for reserving battery swapping, whether to reserve the target battery swapping station for battery swapping. When the user confirms the reservation, he/she may click confirmation to send the confirmation instruction to the cloud server to confirm reserving the target battery swapping station to perform battery swapping.

In this embodiment, in addition to providing the user with the battery swapping cost information corresponding to the request for reserving battery swapping, the cloud server may provide, according to the confirmation instruction of the user, the user with a service of reserving the target battery swapping station to perform battery swapping, thereby improving the battery swapping experience of the user.

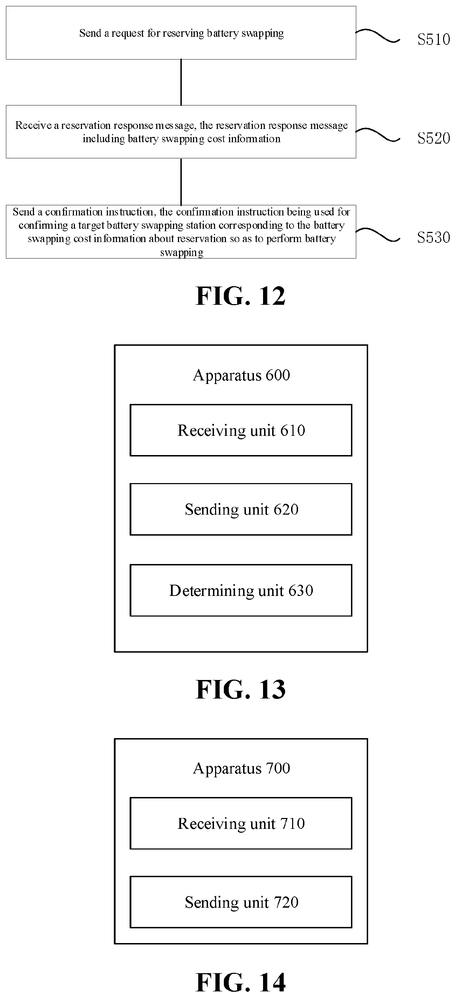

FIG. 12 shows a schematic block diagram of a method 500 for reserving battery swapping according to an embodiment of the present application. The method 500 may be executed by a terminal device, for example, a mobile terminal such as a mobile phone or a tablet of a user. For another example, the terminal device may also be a vehicle-mounted terminal with a human-computer interaction interface. The embodiment of the present application does not limit an execution subject of the method 500. Optionally, as shown in FIG. 12, the method 500 may include some or all of the following contents.

S510: Send a request for reserving battery swapping.

S520: Receive a reservation response message, the reservation response message including battery swapping cost information.

Optionally, in an embodiment of the present application, the request for reserving battery swapping includes information on an estimated departure location, information on estimated departure time, and information on a required battery.

Optionally, in some embodiments, the information on the required battery may include a power level of the required battery.

Optionally, in an embodiment of the present application, the information on the required battery may further include at least one of the number of the required batteries, a power level of the required battery, an SOH of the required battery, a chemical system of the required battery, a size of the required battery, a type of the required battery, and a traveling mileage achievable by the required battery.

Optionally, in an embodiment of the present application, the request for reserving battery swapping further includes a battery swapping label, and the battery swapping label is one of optimal cost, optimal duration, and shortest distance.

Optionally, in an embodiment of the present application, the method 500 may further include: S530, send a confirmation instruction, the confirmation instruction being used for confirming a target battery swapping station corresponding to the battery swapping cost information about reservation so as to perform battery swapping.

The method for reserving battery swapping according to the embodiment of the present application is described in detail above. An apparatus for reserving battery swapping according to an embodiment of the present application will be described below in combination with FIG. 13 and FIG. 14. The technical features described in the method embodiment are applicable to the following apparatus embodiments.

FIG. 13 shows a schematic block diagram of an apparatus 600 for reserving battery swapping according to an embodiment of the present application. As shown in FIG. 13, the apparatus 600 may include some or all of the following contents:
a receiving module 610, configured to receive a request for reserving battery swapping; and
a sending module 620, configured to send a reservation response message in response to the request for reserving battery swapping.

Optionally, in an embodiment of the present application, the apparatus 600 further includes a determining unit 630, and the determining unit 630 may be configured to determine battery swapping cost information according to the received request for reserving battery swapping.

It should be understood that the apparatus 600 according to the embodiment of the present application may correspond to the cloud server in the embodiment of the method 200 of the present application, and the above and other operations and/or functions of the units in the apparatus 600 are intended to implement the corresponding processes of the cloud server in the method 200 in FIG. 2 to FIG. 11. For the sake of brevity, description thereof is omitted here.

FIG. 14 shows a schematic block diagram of an apparatus 700 for reserving battery swapping according to an embodiment of the present application. As shown in FIG. 14, the apparatus 700 may include some or all of the following units:
a sending module 710, configured to send a request for reserving battery swapping; and
a receiving module 720, configured to receive a reservation response message, the reservation response message including battery swapping cost information.

It should be understood that the apparatus 700 according to the embodiment of the present application may correspond to the terminal device in the embodiment of the method 500 of the present application, and the above and other operations and/or functions of the units in the apparatus 700 are intended to implement the corresponding processes of the terminal device in the method 500 in FIG. 2 to FIG. 11. For the sake of brevity, description thereof is omitted here.

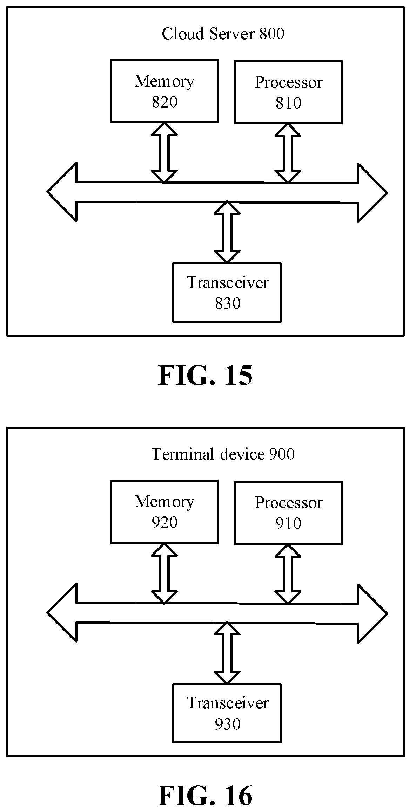

As shown in FIG. 15, an embodiment of the present application further provides a cloud server 800, and the cloud server 800 may be the apparatus 600 in FIG. 13, and may be used to execute the contents of the cloud server corresponding to each method in FIG. 2 to FIG. 11. The cloud server 800 shown in FIG. 15 includes a processor 810, and the processor 810 may invoke and run a computer program from a memory to implement the method in the embodiment of the present application.

Optionally, as shown in FIG. 15, the cloud server 800 may further include a memory 820. The processor 810 may invoke and run a computer program from the memory 820 to implement the method in the embodiment of the present application.

The memory 820 may be a separate device independent of the processor 810, or may be integrated into the processor 810.

Optionally, as shown in FIG. 15, the cloud server 800 may further include a transceiver 830, and the processor 810 may control the transceiver 830 to communicate with other devices, specifically, may send information or data to other devices, or receive information or data sent by other devices.

The transceiver 830 may include a transmitter and a receiver. The transceiver 830 may further include an antenna, and the number of the antenna may be one or more.

In a specific implementation mode, the sending unit and the receiving unit in the apparatus 600 may be implemented by the transceiver 830 in FIG. 15. An acquisition unit and a generation unit in the apparatus 600 may be implemented by the processor 810 in IG. 15.

As shown in FIG. 16, an embodiment of the present application further provides a terminal device 900, and the terminal device 900 may be the apparatus 700 in FIG. 14, and may be used to execute the contents of the terminal device corresponding to FIG. 5. The terminal device 900 shown in FIG. 16 includes a processor 910, and the processor 910 may invoke and run a computer program from a memory to implement the method in the embodiment of the present application.

Optionally, as shown in FIG. 16, the terminal device 900 may further include a memory 920. The processor 910 may invoke and run a computer program from the memory 920 to implement the method in the embodiment of the present application.

The memory 920 may be a separate device independent of the processor 910, or may be integrated into the processor 910.

Optionally, as shown in FIG. 16, the terminal device 900 may further include a transceiver 930, and the processor 910 may control the transceiver 930 to communicate with other devices, specifically, may send information or data to other devices, or receive information or data sent by other devices.

The transceiver 930 may include a transmitter and a receiver. The transceiver 930 may further include an antenna, and the number of the antenna may be one or more.

In a specific implementation mode, the sending unit and the receiving unit in the apparatus 700 may be implemented by the transceiver 930 in FIG. 16.

Optionally, an embodiment of the present application further provides a chip, including a processor, where the processor may invoke and run a computer program from a memory to implement the method in the embodiment of the present application.

Optionally, an embodiment of the present application further provides a computer-readable storage medium for storing a computer program, where the computer program causes a computer to execute the method in the embodiment of the present application.

Optionally, an embodiment of the present application further provides a computer program product, including computer program instructions, where the computer program instructions cause a computer to execute the method in the embodiment of the present application.

Optionally, an embodiment of the present application further provides a computer program. The computer program causes a computer to execute the method in the embodiment of the present application.

It should be understood that the processor in the embodiment of the present application may be an integrated circuit chip with signal processing capability. In the implementation process, various steps of the above method embodiment can be completed by integrated logic circuits in hardware or instructions in the form of software in the processor. The processor may be a general-purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams as disclosed in the embodiments of the present application can be implemented or performed. The general purpose processor may be a microprocessor, or the processor may also be any conventional processor, etc. The steps of the method disclosed in conjunction with the embodiments of the present application can be directly embodied as being performed by the hardware decoding processor or being performed with a combination of hardware and software modules in the decoding processor. The software module may be located in a random access memory, a flash memory, a read-only memory, a programmable read-only memory, or an electrically erasable programmable memory, a register, or the like mature storage media in the art. The storage medium is located in the memory, and the processor reads the information in the memory and completes the steps of the aforementioned method in combination with the hardware thereof.

It can be understood that the memory in the embodiments of the present application may be a volatile memory or a non-volatile memory, or may include both volatile and non-volatile memories. Among them, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. By way of example and not limitation, many forms of RAMs are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, without being limited to, these memories and any other suitable type of memory.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A method for reserving battery swapping, comprising:
receiving a request for reserving battery swapping; and
sending a reservation response message in response to the request for reserving battery swapping;
wherein the reservation response message comprises battery swapping cost information.

2. The method according to claim 1, wherein the request for reserving battery swapping comprises information on an estimated departure location, estimated departure time, and a required battery.

3. The method according to claim 2, wherein the information on the required battery comprises a power level of the required battery.

4. The method according to claim 3, wherein the information on the required battery further comprises at least one of the number of the required batteries, a state of health (SOH) of the required battery, a chemical system of the required battery, a size of the required battery, a type of the required battery, and a traveling mileage achievable by the required battery.

5. The method according to any one of claims 2-4, wherein the request for reserving battery swapping further comprises a battery swapping label, and the battery swapping label is one of optimal cost, optimal duration, and shortest distance.

6. The method according to any one of claims 2-5, wherein before the sending a reservation response message, the method further comprises:
determining the battery swapping cost information according to the request for reserving battery swapping.

7. The method according to claim 6, wherein the determining the battery swapping cost information comprises:
determining at least one battery swapping station that meets needs of the information on the estimated departure time and the required battery within a preset distance range of the estimated departure location;
determining a target battery swapping station that is closest to the estimated departure location in the at least one battery swapping station;
determining estimated time of arrival at the target battery swapping station; and
determining a battery swapping fee according to an electricity price at the estimated time of arrival and the information on the required battery;
wherein the battery swapping cost information comprises information on the target battery swapping station and the battery swapping fee.

8. The method according to claim 7, wherein the determining estimated time of arrival at the target battery swapping station comprises:
obtaining road condition information on a road between the estimated departure location and the target battery swapping station at the estimated departure time; and
determining the estimated time of arrival according to the estimated departure time, a distance between the estimated departure location and the target battery swapping station, and the road condition information.

9. The method according to any one of claim 7 or 8, wherein the sending a reservation response message comprises: sending the battery swapping cost information when the battery swapping label indicates the shortest distance.

10. The method according to claim 6, wherein the determining the battery swapping cost information comprises:
determining at least one battery swapping station that meets needs of the information on the estimated departure time and the required battery within a preset distance range of the estimated departure location;
determining a target battery swapping station corresponding to shortest duration required to arrive at the at least one battery swapping station;
determining estimated time of arrival at the target battery swapping station; and
determining a battery swapping fee according to an electricity price at the estimated time and the information on the required battery;
wherein the battery swapping cost information comprises information on the target battery swapping station and the battery swapping fee.

11. The method according to claim 10, wherein the determining estimated time of arrival at the target battery swapping station comprises:
obtaining road condition information on a road between the estimated departure location and the target battery swapping station at the estimated departure time; and
determining the estimated time of arrival according to the estimated departure time, a distance between the estimated departure location and the target battery swapping station, and the road condition information.

12. The method according to claim 10 or 11, wherein the sending a reservation response message comprises:
sending the battery swapping cost information when the battery swapping label indicates the optimal duration.

13. The method according to claim 6, wherein the determining the battery swapping cost information comprises:
determining at least one battery swapping station that meets needs of the information on the estimated departure time and the required battery within a preset distance range of the estimated departure location;
determining at least one battery swapping fee corresponding to the at least one battery swapping station; and
determining a lowest battery swapping fee in the at least one battery swapping fee, and a target battery swapping station corresponding to the lowest battery swapping fee;
wherein the battery swapping cost information comprises information on the target battery swapping station and the lowest battery swapping fee.

14. The method according to claim 13, wherein the determining at least one battery swapping fee corresponding to the at least one battery swapping station comprises:
determining reserved time of arrival at the at least one battery swapping station; and
determining the at least one battery swapping fee according to an electricity price at the reserved time of arrival and the information on the required battery.

15. The method according to claim 14, wherein the determining estimated time of arrival at the at least one battery swapping station comprises:
obtaining road condition information on a road between the estimated departure location and the at least one battery swapping station at the estimated departure time; and
determining the estimated time of arrival according to the estimated departure time, a distance between the estimated departure location and the at least one battery swapping station, and the road condition information.

16. The method according to claim 14 or 15, wherein the determining battery swapping costs corresponding to at least one battery swapping station according to the request for reserving battery swapping comprises:
determining, according to the estimated departure time and the estimated departure location, estimated power consumption required to arrive at the at least one battery swapping station; and
determining a battery swapping fee of the at least one battery swapping station according to the information on the required battery, the estimated power consumption, and the electricity price at the estimated time of arrival.

17. The method according to any one of claims 13-16, wherein the sending a reservation response message comprises: sending the battery swapping cost information when the battery swapping label indicates the optimal costs.

18. The method according to any one of claims 7-17, wherein the reservation response message further comprises estimated time of arrival corresponding to the target battery swapping station.

19. The method according to any one of claims 1-18, wherein the method further comprises:
receiving a confirmation instruction, the confirmation instruction being used for confirming a target battery swapping station corresponding to the battery swapping cost information about reservation so as to perform battery swapping.

20. A method for reserving battery swapping, comprising:
sending a request for reserving battery swapping; and
receiving a reservation response message, the reservation response message comprising battery swapping cost information.

21. The method according to claim 20, wherein the request for reserving battery swapping comprises information on an estimated departure location, estimated departure time, and a required battery.

22. The method according to claim 21, wherein the information on the required battery comprises a power level of the required battery.

23. The method according to claim 22, wherein the information on the required battery further comprises at least one of the number of the required batteries, an SOH of the required battery, a chemical system of the required battery, a size of the required battery, a type of the required battery, and a traveling mileage achievable by the required battery.

24. The method according to any one of claims 21-23, wherein the request for reserving battery swapping further comprises a battery swapping label, and the battery swapping label is one of optimal cost, optimal duration, and shortest distance.

25. The method according to any one of claims 20-24, wherein the method further comprises: sending a confirmation instruction, the confirmation instruction being used for confirming a target battery swapping station corresponding to the battery swapping cost information about reservation so as to perform battery swapping.

26. An apparatus for reserving battery swapping, comprising:
a receiving unit, configured to receive a request for reserving battery swapping; and
a sending unit, configured to send a reservation response message in response to the request for reserving battery swapping;
wherein the reservation response message comprises battery swapping cost information

27. The apparatus according to claim 26, wherein the request for reserving battery swapping comprises information on an estimated departure location, estimated departure time, and a required battery.

28. The apparatus according to claim 27, wherein the information on the required battery comprises a power level of the required battery.

29. The apparatus according to claim 28, wherein the information on the required battery further comprises at least one of the number of the required batteries, an SOH of the required battery, a chemical system of the required battery, a size of the required battery, a type of the required battery, and a traveling mileage achievable by the required battery.

30. The apparatus according to any one of claims 27-29, wherein the request for reserving battery swapping further comprises a battery swapping label, and the battery swapping label is one of optimal cost, optimal duration, and shortest distance.

31. The apparatus according to any one of claims 27-30, wherein the apparatus further comprises a determining unit, the determining unit being configured to determine the battery swapping cost information according to the received request for reserving battery swapping.

32. The apparatus according to claim 31, wherein the determining unit is configured to:
determine at least one battery swapping station that meets needs of the information on the estimated departure time and the required battery within a preset distance range of the estimated departure location;
determine a target battery swapping station that is closest to the estimated departure location in the at least one battery swapping station;
determine estimated time of arrival at the target battery swapping station; and
determine a battery swapping fee according to an electricity price at the estimated time of arrival and the information on the required battery;
wherein the battery swapping cost information comprises information on the target battery swapping station and the battery swapping fee.

33. The apparatus according to claim 32, wherein the determining unit is configured to:
obtain road condition information on a road between the estimated departure location and the target battery swapping station at the estimated departure time; and
determine the estimated time of arrival according to the estimated departure time, a distance between the estimated departure location and the target battery swapping station, and the road condition information.

34. The apparatus according to any one of claim 32 or 33, wherein the sending unit is configured to send the battery swapping cost information when the battery swapping label indicates the shortest distance.

35. The apparatus according to claim 31, wherein the determining unit is configured to:
determine at least one battery swapping station that meets needs of the information on the estimated departure time and the required battery within a preset distance range of the estimated departure location;
determine a target battery swapping station corresponding to shortest duration required to arrive at the at least one battery swapping station;
determine estimated time of arrival at the target battery swapping station; and
determine a battery swapping fee according to an electricity price at the estimated time and the information on the required battery;
wherein the battery swapping cost information comprises information on the target battery swapping station and the battery swapping fee.

36. The apparatus according to claim 35, wherein the determining unit is configured to:
obtain road condition information on a road between the estimated departure location and the target battery swapping station at the estimated departure time; and
determine the estimated time of arrival according to the estimated departure time, a distance between the estimated departure location and the target battery swapping station, and the road condition information.

37. The apparatus according to claim 35 or 36, wherein the sending unit is configured to send the battery swapping cost information when the battery swapping label indicates the optimal duration.

38. The apparatus according to claim 31, wherein the determining unit is configured to:
determine at least one battery swapping station that meets needs of the information on the estimated departure time and the required battery within a preset distance range of the estimated departure location;
determine at least one battery swapping fee corresponding to the at least one battery swapping station; and
determine a lowest battery swapping fee in the at least one battery swapping fee, and a target battery swapping station corresponding to the lowest battery swapping fee;
wherein the battery swapping cost information comprises information on the target battery swapping station and the lowest battery swapping fee.

39. The apparatus according to claim 38, wherein the determining unit is configured to:
determine reserved time of arrival at the at least one battery swapping station; and
determine the at least one battery swapping fee according to an electricity price at the reserved time of arrival and the information on the required battery.

40. The apparatus according to claim 39, wherein the determining unit is configured to:
obtain road condition information on a road between the estimated departure location and the at least one battery swapping station at the estimated departure time; and
determine the estimated time of arrival according to the estimated departure time, a distance between the estimated departure location and the at least one battery swapping station, and the road condition information.

41. The apparatus according to claim 39 or 40, wherein the determining unit is configured to:
determine, according to the estimated departure time and the estimated departure location, estimated power consumption required to arrive at the at least one battery swapping station; and
determine a battery swapping fee of the at least one battery swapping station according to the information on the required battery, the estimated power consumption, and the electricity price at the estimated time of arrival.

42. The apparatus according to any one of claims 38-41, wherein the sending unit is configured to send the battery swapping cost information when the battery swapping label indicates the optimal costs.

43. The apparatus according to any one of claims 33-42, wherein the reservation response message further comprises estimated time of arrival corresponding to the target battery swapping station.

44. The apparatus according to any one of claims 26-43, wherein the receiving unit is further configured to:
receive a confirmation instruction, the confirmation instruction being used for confirming a target battery swapping station corresponding to the battery swapping cost information about reservation so as to perform battery swapping.

45. An apparatus for reserving battery swapping, comprising:
sending a request for reserving battery swapping; and
receiving a reservation response message, the reservation response message comprising battery swapping cost information.

46. The apparatus according to claim 45, wherein the request for reserving battery swapping comprises information on an estimated departure location, estimated departure time, and a required battery.

47. The apparatus according to claim 46, wherein the information on the required battery comprises a power level of the required battery.

48. The apparatus according to claim 47, wherein the information on the required battery further comprises at least one of the number of the required batteries, an SOH of the required battery, a chemical system of the required battery, a size of the required battery, a type of the required battery, and a traveling mileage achievable by the required battery.

49. The apparatus according to any one of claims 46-48, wherein the request for reserving battery swapping further comprises a battery swapping label, and the battery swapping label is one of optimal cost, optimal duration, and shortest distance.

50. The apparatus according to any one of claims 45-49, wherein the method further comprises: sending a confirmation instruction, the confirmation instruction being used for confirming a target battery swapping station corresponding to the battery swapping cost information about reservation so as to perform battery swapping.

51. A cloud server, comprising a memory and a processor, wherein the memory is configured to store instructions, and the processor is configured to read the instructions and execute the method according to any one of claims 1-19 according to the instructions.

52. A terminal device, comprising a memory and a processor, wherein the memory is configured to store instructions, and the processor is configured to read the instructions and execute the method according to any one of claims 20-25 according to the instructions.

53. A computer-readable storage medium, being configured to store a computer program, wherein the computer program causes a computer to execute the method according to any one of claims 1-19 or the method according to any one of claims 20-25.

54. A chip, comprising a processor, configured to invoke and run a computer program from a memory, so that a device equipped with the chip executes the method according to any one of claims 1-19 or the method according to any one of claims 20-25.
